# EUROPEAN PATENT SPECIFICATION

(11) **EP 2 338 251 B1**
(45) Date of publication and mention of the grant of the patent: **20.02.2019**
(21) Application number: 08877477.3
(22) Date of filing: 20.10.2008
(51) Int. Cl.: H04L 29/06

(54) **NETWORK SECURITY METHOD AND APPARATUS**
NETZWERKSICHERHEITSVERFAHREN UND VORRICHTUNG
PROCÉDÉ ET APPAREIL DE SÉCURITÉ DU RÉSEAU

(43) Date of publication of application: 29.06.2011
(73) Proprietor: Provenance Asset Group LLC, Essex, CT 06426 (US)
(72) Inventor: SMITH, Charles, Pheagans Bay, NSW 2256 (AU)
(74) Representative: Louis Pöhlau Lohrentz
(86) International application number: PCT/AU2008/001550
(87) International publication number: WO 2010/045672

(56) References cited:
- JP-A- 2001 007 849
- US-A1- 2008 075 073
- US-A1- 2008 137 845
- US-A1- 2008 137 845
- BARLOW D A ET AL: "A cryptographic protocol to protect mpls labels", INFORMATION ASSURANCE WORKSHOP, 2003. IEEE SYSTEMS, MAN AND CYBERNETIC S SOCIETY JUNE 18-20, 2003, PISCATAWAY, NJ, USA,IEEE, 18 June 2003 (2003-06-18), pages 237-242, XP010658730, DOI: 10.1109/SMCSIA.2003.1232428 ISBN: 978-0-7803-7808-7
- TISSA SENEVIRATHNE INTERNET DRAFT DOCUMENT: DRAFT-TSENEVIR-SMPLS-02 TXT CATEGORY: INFORMATIONAL: "Secure MPLS - Encryption and Authentication of MPLS payloads; draft-tsenevir-smpls-02.txt", 20020701, no. 2, 1 July 2002 (2002-07-01), XP015005549, ISSN: 0000-0004
- BARLOW D.A. ET AL.: 'A Cryptographic Protocol to Protect MPLS Labels' PROCEEDINGS OF THE 2003 IEEE WORKSHOP ON INFORMATION ASSURANCE UNITED STATES MILITARY ACADEMY, [Online] June 2003, WEST POINT, NY, XP010658730 Retrieved from the Internet: <URL:http://users.ece.gatech.edu/~owen/Rese archlConference%20Publications/MPLS_IAW2003 .pdf> [retrieved on 2008-11-28]
- SENEVIRATHNE ET AL.: 'Secure MPLS - Encryption and Authentication of MPLS Payloads' INTERNET DRAFT, IETF NETWORK WORKING GROUP, [Online] July 2002, XP015005549 Retrieved from the Internet: <URL:http://tools.ietf.org/html/draft-tsene vir-smpls-02>

## Description

### Field of the invention

The present invention relates to a method and apparatus for providing network security in a label switched network. The invention may have particular application to multiprotocol label switching (MPLS) networks.

### Background of the invention

In today's society entities such as businesses, government departments, organisations, individuals frequently transmit data with either themselves or with other entities by use of one or more computer networks (such as the Internet). The data transmitted may be in respect of any of a multitude of purposes, such as file transfer, email, voice and/or video conferencing.

As technology has evolved different types of computer networks and different network communication protocols have been developed and implemented. Three common and overarching considerations present in almost all computer network and protocol design are those of speed (how quickly communication of data can be effected), security (how secure the data being transmitted is), and the resources required. Often these considerations are at odds with each other, insofar as the overheads associated with securing a network can directly impact on the required resources, processing time and, hence, speed.

Label switched networks (in particular MPLS networks) are one type of network currently in use. MPLS networks are packet-switched networks which, as the name suggests, use labels to switch packets and can be used to carry network traffic of different protocols (e.g. IP, ATM, SONET, Ethernet).

Providing security in a label switched network can be done by physical link encryption or by encapsulating MPLS data frames within IP (internet protocol) or ATM (Asynchronous Transfer Mode) tunnels. Both of these security approaches require relatively significant resources and network overheads, thereby impacting on the speed and efficiency of the network.

US2008/137845 is further prior-art.

### Summary of the invention

In one aspect the present invention provides a method for securing an MPLS frame for transmission over a network, the MPLS frame including an MPLS header and an MPLS payload, the method including: receiving the MPLS frame from a source; determining whether the MPLS frame meets security criteria; if the MPLS frame meets the security critera, securing the MPLS payload and creating a secured MPLS frame including the MPLS header and the secured MPLS payload; and forwarding the secured MPLS frame.
The security criteria may include a criterion relating to a label value of a label in the MPLS header.
The security criteria may include that a label value in a top label in the MPLS header is greater than fifteen.
The MPLS payload may be secured by use of a single key cryptography method. Further frames received from a source for transmission over a network that meet the security criteria may be secured using a single key cryptography method, the further frames secured using the same key regardless of their source or destination.
The size of the secured MPLS frame may be checked against a MTU size of the network and if the secured MPLS frame exceeds the MTU size of the network the secured MPLS frame is dropped and an error condition flagged.
The method may further include modifying a ToS field in the MPLS header to create a modified MPLS header for forwarding with the secured MPLS frame.
In a second aspect the present invention provides a security device for securing traffic over an MPLS network, the security device configured to receive frames from a first network device and forward frames to a second network device, the security device including: an input/output interface for receiving and forwarding frames; a memory; a security engine for analysing received frames against security criteria and securing frames which meet the security criteria, the security criteria including the frame being an MPLS frame, wherein if a received frame meets the security criteria: an MPLS header and an MPLS payload from the MPLS frame are parsed; the MPLS payload is secured by the security engine to create a secured MPLS payload; the MPLS header and secured MPLS payload are assembled to create a secured MPLS frame; and the secured MPLS frame is passed to the input/output interface to be forwarded to the second network device.

The input/output interface may include at least one input port for receiving frames and at least one output port for forwarding frames.

The input/output interface may include a dedicated control port.

The security criteria may further include a criterion relating to a label value of a label in the MPLS header.

The security criteria may further include that a label value of a top label in the MPLS header is greater than fifteen.

The security engine may secure the MPLS payload using a single key cryptography method.

Prior to being forwarded to the second network device the secured MPLS frame may be encapsulated within an Ethernet frame including an Ethernet header and an Ethernet CRC.

The size of the Ethernet frame may be compared to a MTU size of the network and, if the size of the Ethernet frame exceeds the MTU size the Ethernet frame is dropped and an error condition flagged.

If a frame meets the security criteria a ToS field in the MPLS header may be modified to create a modified MPLS header for forwarding with the secured MPLS frame.

If a received frame does not meet the security criteria of being an MPLS frame the frame is not processed by the security engine.

If a received frame meets the security criteria of being an MPLS frame and a label value of a top label in the MPLS header is less than or equal to fifteen the received frame may be processed as a control plane frame.

In a third aspect the present invention provides a method for securing an label switched frame for transmission over a network, the label switched frame including a label switched frame header and a label switched frame payload, the method including: receiving the label switched frame from a source; determining whether the label switched frame meets security criteria; if the label switched frame meets the security critera, securing the label switched frame payload and creating a secured label switched frame including the label switched frame header and the secured label switched frame payload; and forwarding the secured label switched frame.

The security criteria may include a criterion relating to a label value of a label in the label switched frame header.

The label switched frame payload may be secured by use of a single key cryptography method.

In a fourth aspect the present invention provides a security device for securing traffic over a label switched network, the security device configured to receive frames from a first network device and forward frames to a second network device, the security device including: an input/output interface; a memory; a security engine for analysing received frames against security criteria and securing frames which meet the security criteria, the security criteria including the frame being an label switched frame, wherein if a received frame meets the security criteria: a label switched frame header and a label switched frame payload of the label switched frame are parsed; the label switched frame payload is secured by the security engine to create a secured label switched frame payload; the label switched frame header and secured label switched frame payload are assembled to create a secured label switched frame; and the secured label switched frame is passed to the input/output interface for forwarding to the second network device.

The input/output interface may include at least one input port for receiving frames and at least one output port for forwarding frames.

The security criteria may further include a criterion relating to a label value of a label in the label switched frame header.

The security engine may secure the label switched frame payload using a single key cryptography method.

### Brief description of the drawings / figures

An embodiment of the invention will now be described with reference to the accompanying figures in which:
Figure 1 provides a topology of a network including a security device according to an embodiment of the invention;
Figure 2 provides a functional block diagram of a security device in accordance with an embodiment of the invention;
Figure 3 provides a diagram showing the transmission of a packet from a source to destination in the network of figure 1;
Figure 4A provides a representation of a data frame prior to modification by a security device as shown in figure 2;
Figure 4B provides a representation of a data frame with an encrypted payload; and
Figure 4C provides a representation of a data frame with a decrypted payload.

### Detailed description of the embodiments

The invention will be described in relation to MPLS network technology. Detailed information regarding the MPLS networks can be obtained from The Internet Engineering Task Force (IETF). In particular IETF RFC 3031 describes standardised MPLS architecture and is incorporated herein by reference.

Further, the invention will be described in relation to the use of Ethernet for transmission of MPLS frames, though it will be appreciated that alternative transmission protocols may be used with the present invention.

### The network

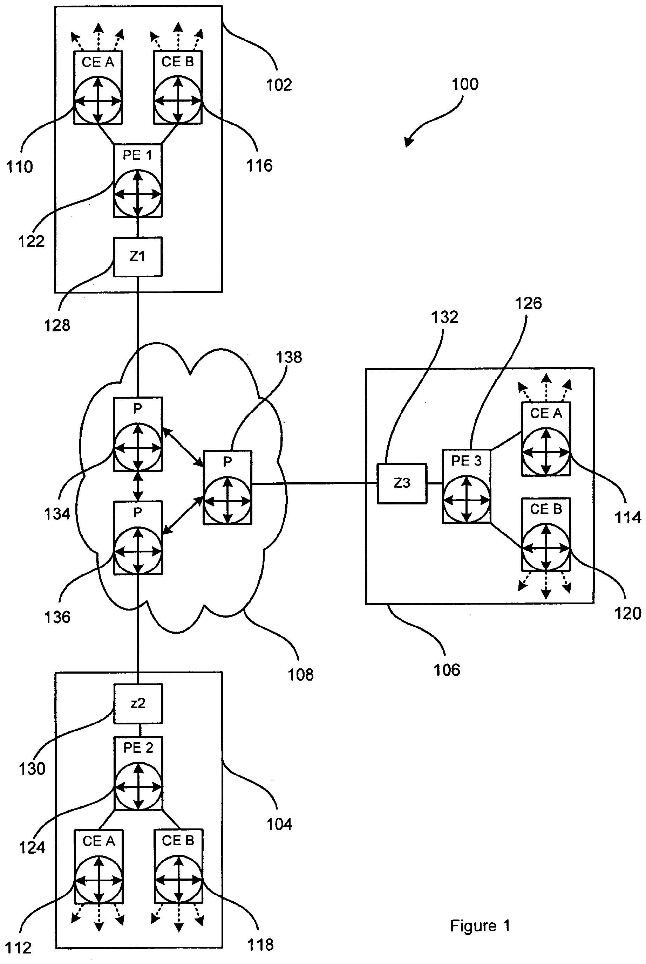

Figure 1 provides a depiction of a network 100 suitable for use with the present invention. The network 100 includes first, second and third areas 102, 104 and 106 interconnected by an MPLS core network 108. Areas 102, 104 and 106 may represent, for example, different geographical locations (e.g. Sydney, Tokyo, New York) and are interconnected by the MPLS core network 108. Each area 102 to 106 may include a number of distinct and separately owned/controlled networks, and each network may be of a different type.

For the purposes of illustration, each of the areas 102 to 106 includes (in this example) the two different customer presences - customer A and customer B, both customers making use of the MPLS network. Only the customer edge (CE) routers 110, 112, 114 (for customer A) and 116, 118 and 120 (for customer B) are shown in the diagram, however it will be appreciated that each CE router 110 to 120 is connected to the local area network (LAN) of the customer (represented by dotted arrows). Typically, the CE router will be located on the customer's premises and provides an interface (e.g. Ethernet) between the customer's LAN and the MPLS core network 108.

Each CE router (110 to 120) connects to the MPLS core network 108 via a provider edge (PE) router 122, 124 and 126 (for areas 102, 104 and 106 respectively). PE routers are controlled by the provider of the MPLS core network 108 and provide ingress/egress points to the MPLS core network 108. PE routers typically have multiple ports supporting different network protocols (e.g. frame relay, ATM, Ethernet).

On receiving a frame from a customer via the CE router the PE router creates an appropriate MPLS header for the frame and appends the MPLS header to the frame. The original frame sent by the customer becomes, therefore, the MPLS payload.

The MPLS header includes a label stack of one or more labels, each label including a 20-bit label value, a 3-bit Type of service (ToS) field, a 1-bit flag to indicate whether the label is the bottom of the stack, and an 8-bit time to live (TTL field). The labels in the MPLS header allow for traffic handling in the MPLS network.

Once the PE router has appended the MPLS header to the frame the PE router forwards the MPLS frame onto the MPLS network. Significantly, frames forwarded from the PE router to the MPLS network (and frames travelling from the MPLS core network 108 to the PE router) travel via a security device as described below.

PE routers 122 to 126 also hold responsibility for establishing label switched paths (LSPs) through the MPLS core network 108. Establishment of LSPs is achieved via the control plane of the network. For the purposes of this description the control plane of the network is used to refer to network traffic devoted to maintenance and other administrative functions of the network itself rather than traffic transmitting end user data. As per the MPLS network standard, LSPs may be established by use of a label distribution protocol (LDP) and may either be control driven (i.e. established prior to the transmission of data) or data driven (i.e. established at the time data for a previously unmapped destination is received).

In the present embodiment each PE router 122 to 126 connects to the MPLS core network 108 via a security device 128 to 132. The functions of the security switches 128 to 132 are discussed in detail below.

The MPLS core network 108 itself includes a number of provider (P) routers 134, 136 and 138. Each P router is a transit router which receives control plane messages in order to establish the requisite LSPs in the MPLS core network 108 (e.g. by use of a label distribution protocol) and effects the switching of data packets within the MPLS core network 108 based on the labels within the MPLS header and the established LSP's.

When a labelled packet is received by a P router 134 to 138, the P router reads the label value of the top label in the stack and looks this value up in a label information base (LIB), stored on and maintained by the P router. For each label value the LIB stores information as to where frames bearing that label should be forwarded (i.e. the next hop) and whether any modification to the label stack is required prior to forwarding the frame (e.g. pushing one or more new labels on to the stack, replacing the top label with a new top label, or popping a label off the stack).

As is conventional, the network 100 can be divided into trusted and untrusted zones. The CE routers 110 to 112, the customer networks beyond the CE routers 110 to 112 the PE routers 122 to 126, and the security devices 128 to 132 are either within the control of the customer or the MPLS provider or the customer and are therefore trusted. The P routers 134 to 138 of MPLS core network 108 are, on the other hand, not necessarily within the control of either the customer of the MPLS provider and as such are considered untrusted. Each PE router 122 to 126, therefore, provides a link from a trusted zone (the PE router itself and the connected CE routers) to an untrusted zone (MPLS core network 108).

### Security devices

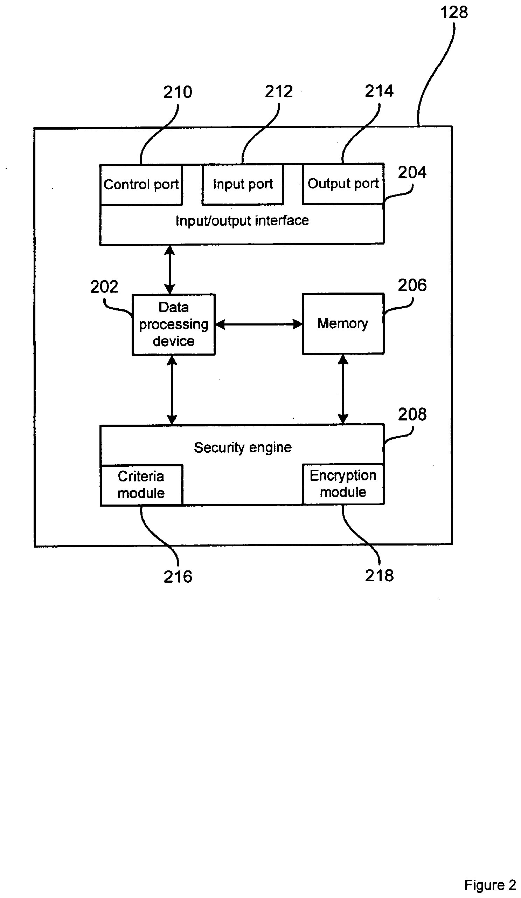

The function of the security devices 128 to 132 will now be described in detail with reference to figure 2 which shows a functional block diagram of a security device 128.

Turning to figure 2, a functional block diagram of a security device 128 in accordance with an embodiment of the invention is provided. The security device 128 includes a data processing device 202, which is connected to a memory 206, a security engine 208, and an input/output interface 204.

The data processing device 202 may be a microprocessor, microcontroller, programmable logic device or other suitable device, or a plurality of such devices each performing part of the functions of the data processing device 202. Instructions and data to control operation of the data processing device 202 are stored in a memory 206, which is in data communication with, or forms part of, the data processing device 202. Typically, the security device 128 will include both volatile and non-volatile memory and more than one of each type of memory, with such memories being collectively represented by the memory 206. Memory 206 may also be used to cache incoming and outgoing frames received at/sent to the input/output interface 204.

The input/output (I/O) interface 204 allows for communication with external devices (such as, for example, a PE router, a P router, and/or a computer by which the security device 128 may be configured). In this instance the I/O interface 204 includes a control port 210 for receiving control plane frames, an input port for receiving incoming frames, and an output port for forwarding frames. Variously configured I/O interfaces are, of course, possible.

The security engine 208 may form part of the data processing device 202 or may be a stand alone data processing device as shown. The security engine 208 may be a microprocessor, microcontroller, programmable logic device or other suitable device. The security engine 208 may be provided with its own dedicated memory, or may make use of memory 206. The security engine in this embodiment includes a criteria module 216 and an encryption module 218. Once again, either or both of the criteria modules 216 and encryption module 218 may be integrated with the security engine 208 (or, indeed, the data processing device 202) or may be dedicated processing devices. For example the criteria module 216 may implemented as hardware, firmware, or software in the data processing device 202.

As per the diagram in figure 1, security device 128 is installed between trusted PE router 122 and the untrusted MPLS core network 108 (via P router 134). All outgoing traffic (i.e. traffic being transmitted from the trusted PE router 122 to the P router 134) and all incoming traffic (i.e. traffic being passed from the untrusted P router 134 to the trusted PE router 122) passes through security device 128.

When a frame is sent from CE router 110 for transmission to destination CE router 112 over the MPLS network 108 the frame is received by PE router 122 which appends an MPLS header to the frame to create an MPLS frame. The original frame then becomes the MPLS payload. If a path to the required destination has not previously been established the PE router 122 will also undertake the actions required to establish the path.

The PE router 122 then forwards the frame to security device 128. The security device 128 receives the frame at the input port 212 and the data processing device 202 controls the passing of the frame to the security engine 208. The criteria module 216 of the security engine 208 checks the frame to determine whether the frame meets pre-defined security criteria. As is described further below, for any frames not meeting the pre-defined security criteria the security device is essentially transparent.

If the frame meets the pre-defined security criteria (part of which is that the frame is an MPLS frame) the security engine 208 parses the MPLS frame to separate it into an MPLS header and MPLS payload. The parsed header is stored in memory 206. The MPLS payload is then sent to the encryption engine 218 which secures the MPLS payload. The security engine 208 then reassembles the MPLS header and (now secured) MPLS payload, and passes the resulting frame to the MPLS core network 108. If the criteria module 216 is implemented as part of the data processing device 202, then parsing may also be performed by the data processing device 202.

Security device 130 at the destination undertakes a similar check of all frames. If a frame meets the encryption criteria security device 130 assumes the payload of the MPLS frame has been encrypted. As with outgoing frames the security device 130 then separates the MPLS header and MPLS payload, passes the MPLS payload to the encryption engine to be decrypted, reassembles the MPLS frame and passes the frame to PE router 124.

If a frame does not meet the security criteria the security device 128 determines the frame to be a frame that does not need to be encrypted/decrypted and switches the frame without separating the MPLS header and MPLS payload and encrypting/decrypting the payload.

For example, the security criteria described below are such that non MPLS frames and MPLS frames that relate to control plane traffic will not meet the security criteria and therefore be switched by the security device without further processing. By switching these frames without undue processing any impact on the performance of the security device (and therefore the network as a whole) is kept to a minimum.

Regardless of whether the MPLS payload is encrypted/decrypted or not, before passing the frame on to the next hop (i.e. either the P router or the PE router) the security device switches the source and destination addresses of the Ethernet frame and recalculates the check sum data for the Ethernet frame. This provides for seamless integration between the PE and P routers. If required the security device will also decrement the time to live (TTL) field of the frame and if the TTL is zero drop the frame.

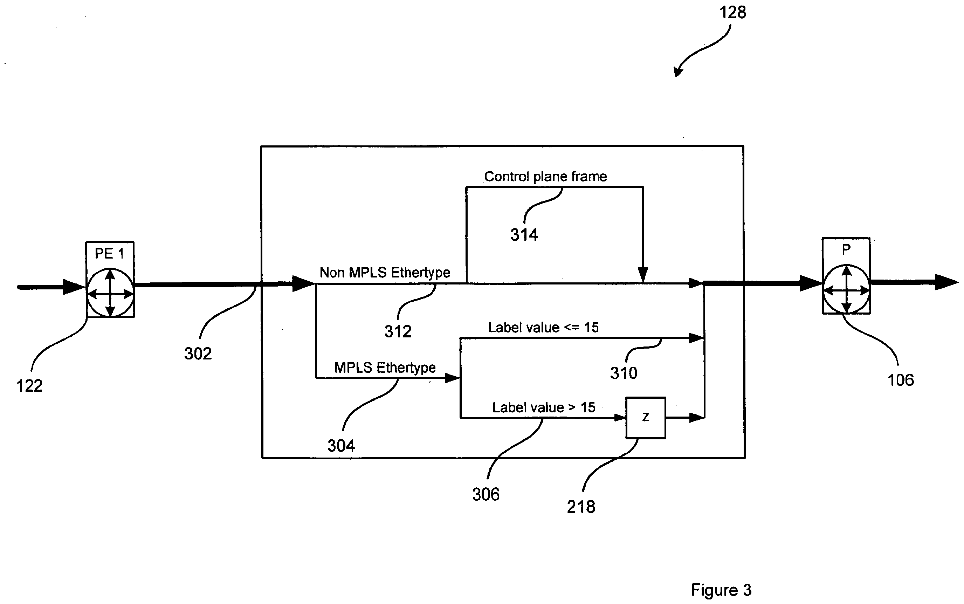

Figure 3 provides a representation of network traffic received by security device 128 from PE router 122. As can be seen, of the incoming frames 302 only those which are MPLS type frames (traffic flow 304) with a label value of greater than 15 (traffic flow 306) are processed by the encryption engine 218 of the security device 128. MPLS frames with a label value of less than or equal to 15 (traffic flow 310), and non-MPLS frames (traffic flow 312) all bypass the encryption engine 218.

Some of the non-MPLS frames may relate to control plane traffic and be intercepted by the security device 128 (traffic flow 314). These frames may either be processed and then dropped by the security device 128 or processed and forwarded to a further destination.

### Security criteria

As discussed above, the security criteria used in the security device determines which frames the security device will encrypt the payload of, and which frames will be switched without payload encryption. These criteria may, of course, be set as desired, however appropriate criteria (in this embodiment) are that
- the frame is an MPLS Ethernet frame (i.e. the frame Ethertype is either 0x8847 or 0x8848); and
- the label value of the top label in the MPLS header is greater than 15 (noting that label values 0 to 3 are assigned and label values 4 to 15 are, currently, reserved to be assigned by IANA, based on IETF Consensus).

By setting the security criteria in this manner the security devices are completely transparent to all non-MPLS frames and to all MPLS frames dealing with network management and upkeep (i.e. control plane frames). For any frame not meeting the security criteria the security device essentially acts as Layer 2 Ethernet switch between trusted and untrusted ports.

As noted above, if the frame meets the security criteria the MPLS payload of the MPLS frame (i.e. the original frame as sent by the customer) is sent to the encryption module 218 to be secured. If the frame is outgoing from the PE router to the MPLS network the encryption module 218 encrypts the MPLS payload. If the MPLS payload is incoming from the MPLS network to the PE router the MPLS payload is decrypted.

While any form of encryption may be used to encrypt/decrypt the payload (the specific type dependent on the level of security required), single key encryption such as Triple DES (TDES) may be suitable for many applications. Use of a single key encryption method has the advantage that only a single common key need be provided to all the security devices on the network, thus minimising network overhead.

Once an MPLS payload has been encrypted/decrypted the security device 128 checks the modified MPLS payload to ensure that its size will not result in the maximum transmittable unit (MTU) for the network being exceeded. If the modified MPLS payload will result in the MTU being exceeded the frame is dropped and an error flagged through the control plane.

For frames received at a security device from a trusted PE router (i.e. frames being transmitted onto the MPLS core network 108 via a security device) the algorithm by which the security device deals with frames can be described in pseudo code as follows:

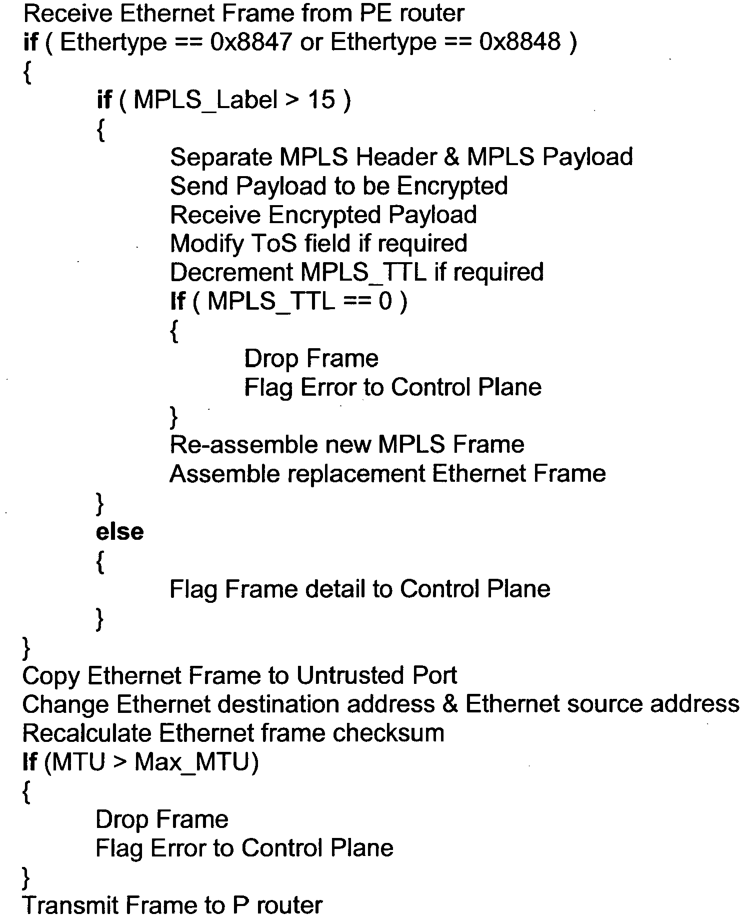

For frames received at a security device from a P router (i.e. frames being received at a security device from a P router on the MPLS core network 108) the algorithm by which the security device deals with frames can be described in pseudo code as follows:

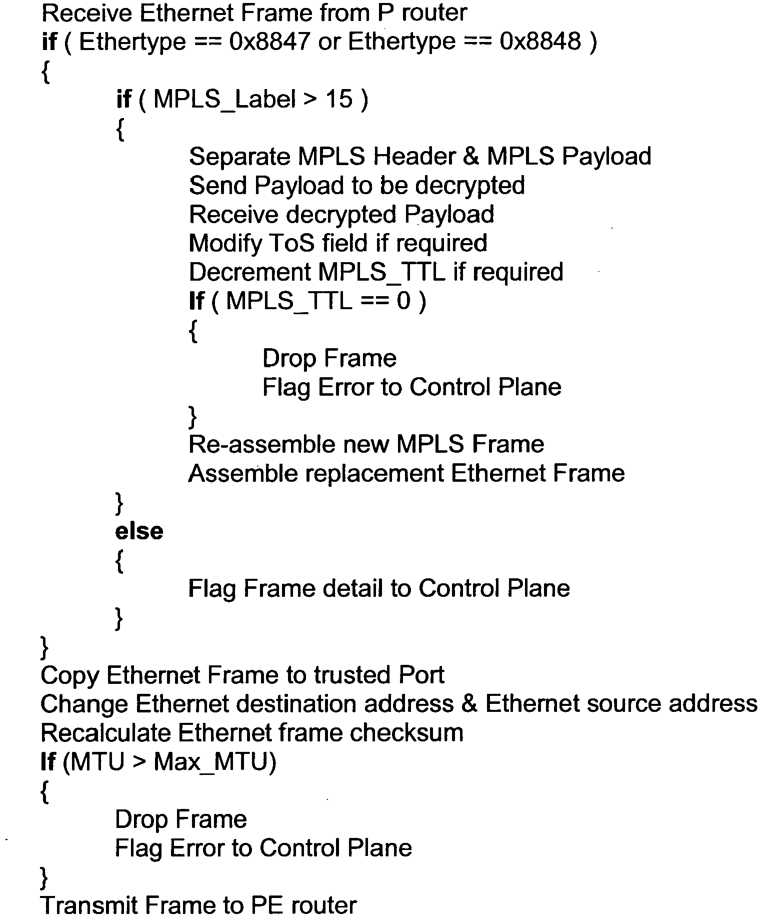

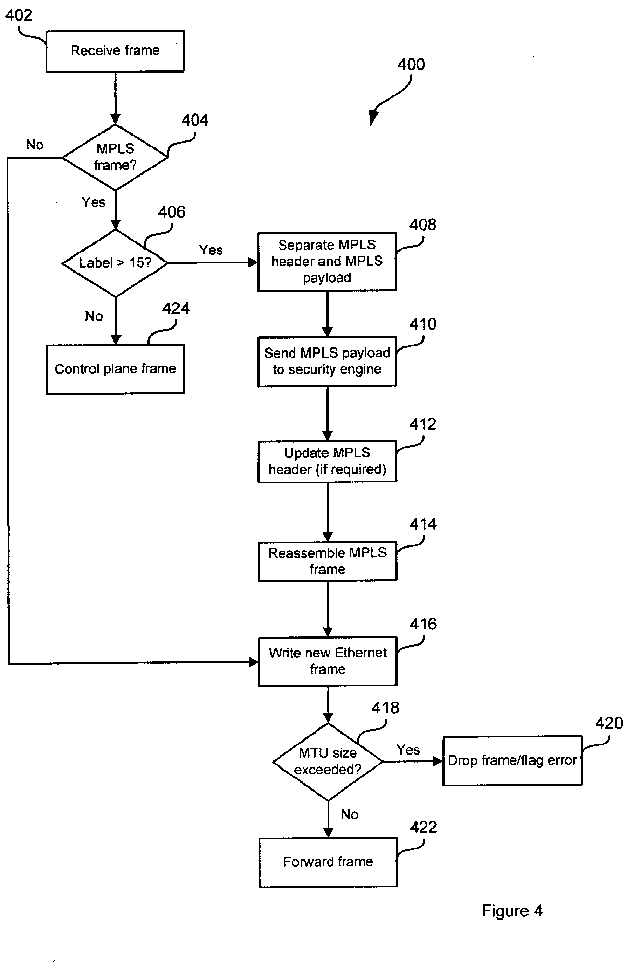

Figure 4 provides a flow chart broadly depicting the steps 400 undertaken at the security device 128.

In step 402 the security device 128 receives a frame, and in steps 404 and 406 the criteria module 216 of the security device 128 analyses the frame to determine whether it meets the security criteria.

If the frame meets the security criteria (i.e. by being an MPLS frame as checked in step 404 with a label value of greater than 15 as checked in step 406) the security device 128 separates the MPLS header and MPLS payload (step 408).

In step 410 the MPLS payload is sent to the encryption module 218 for processing. If the frame has been received from a P router the encryption module 218 processing will result in the decryption of the contents of the MPLS payload, and if received at the security device 128 from a PE router the encryption module 218 processing will result in the encryption of the MPLS payload (the source of the frame will be determined from the port at which the frame is received).

In step 412 the security device 128 undertakes further processing of the MPLS header if required. This may include, for example, updating the MPLS TTL field (and discarding the packet/flagging an error condition to the control plane if the TTL equals zero) and modification of the ToS field if required.

In step 414 the security device 128 reassembles the MPLS frame (with the updated MPLS header and MPLS payload as processed by the security engine).

In step 416 the MPLS frame is written into a new Ethernet frame with updated Ethernet fields (source, destination, CRC) and in step 418 the size of the frame is compared against the MTU size for the network. If the frame exceeds the MTU size for the network the frame is dropped and an error flagged to the control plane (step 420). If the frame is within the MTU size for the network the security device 128 forwards the frame on (step 422).

If, at step 406, the frame is determined to be an MPLS frame with a label value of less than or equal to 15, the frame is flagged as a control frame (step 424) to be processed as appropriate by the security device 128.

If, at step 404, the frame does not meet the security criteria processing proceeds immediately to step 416.

### Key distribution between security devices

Key distribution between the security devices 128 to 132 can be achieved using existing IP based Independent Key Exchange Methods as defined by the IP Security Protocol (IPSec).

In order to provide for key exchange (and, if desired, other control plane functionality/traffic) the security device of the present embodiment is provided with a secured control port 210. Alternatively, the security devices may be configured to intercept specific IP frames with defined TCP/IP ports in order to effect key exchange (and other control plane functionality/traffic). As a further alternative, a reserved MPLS label value (i.e. one of labels 4 to 16) may be assigned to key exchange (or, again, other control plane traffic) and intercepted by the security device on this basis.

### Modification of ToS field

The security devices may also be configured to modify the ToS field in the MPLS header. This may be appropriate where the security devices are owned/operated by a third party and that third party wishes to enforce a specific quality of service different to that specified (and written to the MPLS header) by the owners/controllers of the PE routers.

One device with suitable hardware to be configured into a security device as described above is the Thales Datacryptor.

### Example of network traffic

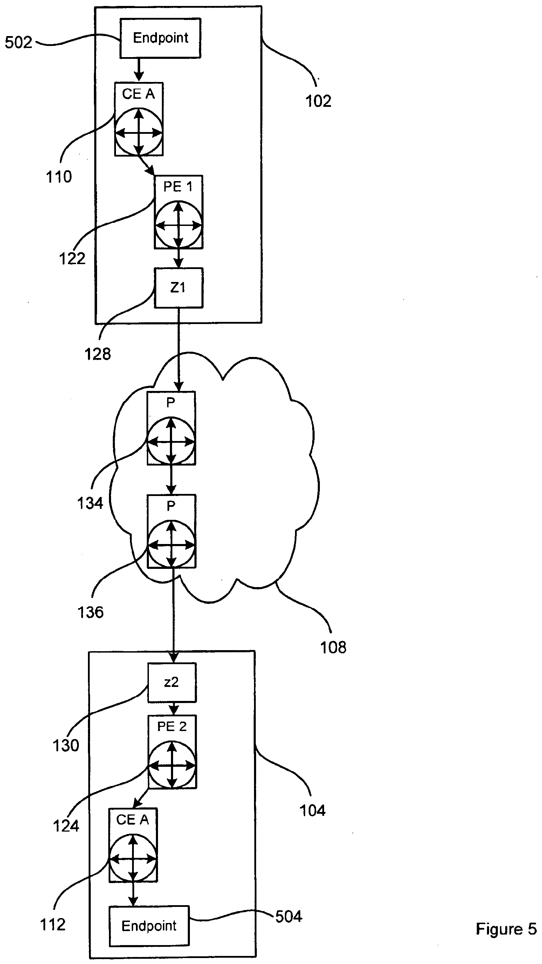

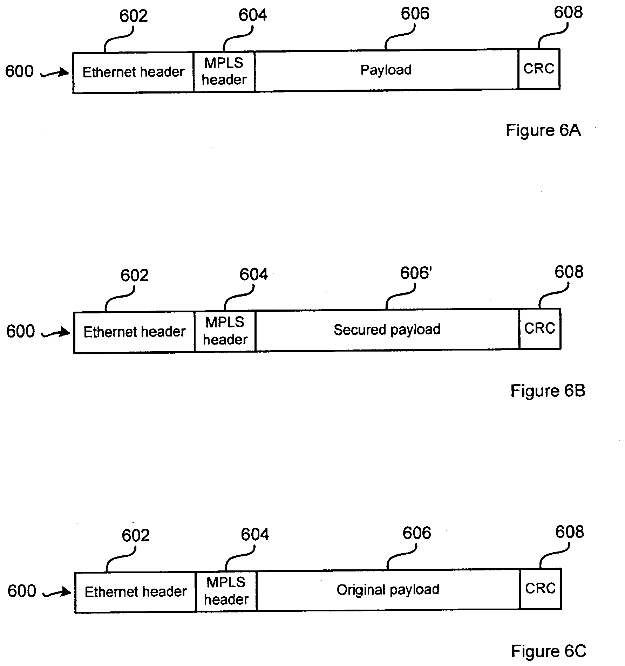

Referring to figures 5 and 6 transmission of a packet from a customer A endpoint 502 in area 102 to a customer A endpoint 504 in area 104 will be described in detail. This description would equally apply, *mutatis mutandis,* to traffic from any endpoint in one area to an endpoint in another area travelling over the MPLS network.

By way of broad overview, and illustrated in figure 3, the packet in this instance travels from endpoint 502 to the CE router 110, to the PE router 122, to the security switch 128, through the MPLS core network 108, to the security switch 130, to the PE router 124, to the CE router 112, to endpoint 504. The path of the traffic within the MPLS core network 108 will depend on the LSP established but for the purposes of description will be taken to be from P router 134 to P router 136.

### Frames meeting pre-defined security criteria

Figures 6A to 6C provide a high-level depiction of the packet at various points in the transmission from endpoint 502 to endpoint 504.

Endpoint 502 generates an IP frame which is encapsulated within an Ethernet frame and sent to CE router 110. CE router 110 then sends the frame to PE router 122.

Figure 6A depicts the Ethernet frame 500 as it leaves PE router 122. As can be seen, the Ethernet frame includes an Ethernet header 602, a MPLS header 604 (added to the Ethernet frame by the PE router 122), the payload 606 (i.e. the data relating to the IP packet(s) being transmitted by the endpoint 502), and a cyclic redundancy check (CRC) field 608.

Frame 600 is transmitted from the PE router 122 to the security device 128.

Figure 6B depicts the frame after being received and processed by security device 128. In this instance it is assumed that the frame has met the predetermined security criteria (i.e. the frame is an Ethernet frame and the label value of the top label in the label stack of the MPLS header is greater than 15).

As the frame meets the security criteria the security device 128 sends the payload 604 of frame 600 to the encryption module 218 where the payload is encrypted to create secured payload 606'. The security device 128 also modifies the Ethernet header 602 (such that the Ethernet source and destination addresses are changed as required), and recalculates the CRC 608 to create new CRC consistent with the changes made to the frame. The frame is then reassembled and forwarded to the untrusted P router 134 in the MPLS core network 108.

As noted above, if configured to do so the security device 128 will also modify the ToS field within the MPLS header.

Frame 600 then traverses the MPLS core network 108 in accordance with the data in the MPLS header 604 and is (eventually) transmitted to security device 130.

When security device 130 receives frame 600 it tests the frame 600 against the pre-defined security criteria. On passing that test the security device 130 sends the payload of the frame 606' to the encryption module 218 where it is decrypted to the original payload 606. Once again the security device 130 amends the Ethernet header 602 to change the source and destination addresses as required and recalculates the CRC 606. The frame 600 is then reassembled, checked to ensure it does not exceed the network MTU, and forwarded to the trusted PE router 124.

The trusted PE router strips out the MPLS header 604 and forwards the frame 600 to the CE router 112 as per normal Ethernet frame transmission (the PE router able to access the decrypted payload 606 in order to determine the appropriate address to forward the frame 600 to).

As will be appreciated, for the entire time frame 600 is being handled by untrusted routers/switches (i.e. between PE router 122 and PE router 124) the entire payload 606 of the frame 600 is encrypted. As such, the only information that can be obtained by a third party intercepting the frame is the information present in the Ethernet header 602, the MPLS header 604, and the Ethernet CRC 608 - i.e. information sufficient to determine the source of the frame as PE router 122 and the destination of the frame as PE router 124. All information regarding the network topology beyond the PE routers 122 and 124 is held within the original IP packet(s) created by endpoint 502 which is encrypted within the secured payload and therefore inaccessible to third parties.

Further, by not encrypting the MPLS header 604 each P router can easily access the MPLS header information in order to transmit the packet as required (i.e. the P routers do not need to undertake any decryption/encryption in order to determine the action required for any given frame), thus providing for efficient frame forwarding. This is in contrast, for example, to physical link encryption which requires each link in the network to decrypt and then re-encrypt each frame being transmitted.

While in the embodiment of the invention described above security devices 128 to 132 have been represented and described as distinct hardware components it would, of course, be possible to incorporate the functionality of the security devices 128 to 132 into pre-existing devices. For example, the security devices 128 to 132 and the PE routers 122 to 126 could be provided as three composite devices (i.e. PE router 122 coupled with security switch 128 in a single device, PE router 124 coupled with security switch 130 in a single device, and PE router 126 coupled with security switch 132 in a single device).

It will be understood that the invention disclosed and defined in this specification extends to all alternative combinations of two or more of the individual features mentioned or evident from the text or drawings. All of these different combinations constitute various alternative aspects of the invention.

## Claims

1. A method for securing a label switched frame (600) for transmission over a network (100), the label switched frame (600) including a label switched frame header (604) and a label switched frame payload (606), the method including:
receiving the label switched frame (600) from a source;
determining whether the label switched frame (600) meets security criteria;
if the label switched frame (600) meets the security criteria, securing the label switched frame payload (606) and creating a secured label switched frame including the label switched frame header (604) and the secured label switched frame payload (606'); and
forwarding the secured label switched frame.

2. A method according to claim 1,
wherein the security criteria includes a criterion relating to a label value of a label in the label switched frame header (604).

3. A method according to claim 1 or claim 2,
wherein the label switched frame payload (606) is secured by use of a single key cryptography method.

4. A method according to any one of claims 1 to 3,
wherein the label switched frame (600) is an MPLS frame and the label switched frame header (604) is an MPLS header.

5. A method according to claim 4,
wherein the security criteria includes that a label value in a top label in the MPLS header is greater than fifteen.

6. A method according to any one of the preceding claims,
wherein further frames received from a source for transmission over a network that meet the security criteria are secured using a single key cryptography method, the further frames secured using the same key regardless of their source or destination.

7. A method according to any one of claims 4 to 6,
wherein the size of the secured MPLS frame is checked against a MTU size of the network (100) and if the secured MPLS frame exceeds the MTU size of the network (100) the secured MPLS frame is dropped and an error condition flagged.

8. A security device (128) for securing traffic over a label switched network (100), the security device configured to receive frames from a first network device and forward frames to a second network device, the security device including:
an input/output interface (204);
a memory (206);
a security engine (208) for analysing received frames against security criteria and securing frames which meet the security criteria, the security criteria including the frame being an label switched frame, wherein
if a received frame (600) meets the security criteria:
a label switched frame header (604) and a label switched frame payload (606) of the label switched frame (600) are parsed;
the label switched frame payload (606) is secured by the security engine (208) to create a secured label switched frame payload (606');
the label switched frame header (604) and secured label switched frame payload (606') are assembled to create a secured label switched frame; and
the secured label switched frame is passed to the input/output interface (204) for forwarding to the second network device.

9. A security device (128) according to claim 8,
wherein the input/output interface (204) includes at least one input port (212) for receiving frames and at least one output port (214) for forwarding frames.

10. A security device (128) according to claim 8 or claim 9,
wherein the input/output interface (204) includes a dedicated control port (210).

11. A security device (128) according to any one of claims 8 to 10,
wherein the security criteria further includes a criterion relating to a label value of a label in the label switched frame header (604).

12. A security device (128) according to any one of claims 8 to 11,
wherein the security engine (208) secures the label switched frame payload (606) using a single key cryptography method.

13. A security device (128) according to any one of claims 8 to 12,
wherein the label switched frame (600) is an MPLS frame and the label switched frame header (604) is an MPLS header.

14. A security device (128) according to claim 13,
wherein the security criteria further includes that a label value of a top label in the MPLS header is greater than fifteen.

15. A security device (128) according to any one of claims 13 or 14,
wherein prior to being forwarded to the second network device the secured MPLS frame is encapsulated within an Ethernet frame including an Ethernet header (602) and an Ethernet CRC (608).

## Patentansprüche

1. Verfahren zum Sichern eines Label-geschalteten Rahmens (600) zur Übertragung über ein Netzwerk (100), wobei der Label-geschaltete Rahmen (600) einen Label-geschalteten Rahmenkopf (604) und eine Label-geschaltete Rahmennutzlast (606) beinhaltet, wobei das Verfahren beinhaltet:
Empfangen des Label-geschalteten Rahmens (600) von einer Quelle;
Bestimmen, ob der Label-geschalteten Rahmen (600) die Sicherheitskriterien erfüllt;
wenn der Label-geschaltete Rahmen (600) die Sicherheitskriterien erfüllt, Sichern der Nutzlast (606) des Label-geschalteten Rahmens und Erzeugen eines gesicherten Label-geschalteten Rahmens mit dem Label-geschalteten Rahmenkopf (604) und der gesicherten Label-geschalteten Rahmennutzlast (606'); und
Weiterleiten des gesicherten Label-geschalteten Rahmens.

2. Verfahren nach Anspruch 1, wobei die Sicherheitskriterien ein Kriterium in Bezug auf einen Labelwert eines Labels in dem Label-geschalteten Rahmenkopf (604) beinhalten.

3. Verfahren nach Anspruch 1 oder Anspruch 2, wobei die Label-geschaltete Rahmennutzlast (606) durch die Verwendung eines Ein-Schlüssel-Kryptographieverfahrens gesichert wird.

4. Verfahren nach einem der Ansprüche 1 bis 3, wobei der Label-geschaltete Rahmen (600) ein MPLS-Rahmen ist und der Label-geschaltete Rahmenkopf (604) ein MPLS-Header ist.

5. Verfahren nach Anspruch 4, wobei die Sicherheitskriterien beinhalten, dass ein Labelwert in einem Top-Label im MPLS-Header größer als fünfzehn ist.

6. Verfahren nach einem der vorhergehenden Ansprüche, wobei weitere Rahmen, die von einer Quelle zur Übertragung über ein Netzwerk empfangen werden, die die Sicherheitskriterien erfüllen, unter Verwendung eines Ein-Schlüssel-Kryptographieverfahrens gesichert werden, wobei die weiteren Rahmen mit demselben Schlüssel unabhängig von ihrer Quelle oder ihrem Ziel gesichert werden.

7. Verfahren nach einem der Ansprüche 4 bis 6, wobei die Größe des gesicherten MPLS-Rahmens gegen eine MTU-Größe des Netzwerks (100) geprüft wird und wenn der gesicherte MPLS-Rahmen die MTU-Größe des Netzwerks (100) überschreitet, der gesicherte MPLS-Rahmen fallengelassen und ein Fehlerzustand markiert wird.

8. Sicherheitsvorrichtung (128) zum Sichern des Verkehrs über ein Label-geschaltetes Netzwerk (100), wobei die Sicherheitsvorrichtung konfiguriert ist, um Rahmen von einem ersten Netzwerkgerät zu empfangen und Rahmen an ein zweites Netzwerkgerät weiterzuleiten, wobei die Sicherheitsvorrichtung Folgendes beinhaltet:
eine Ein-/Ausgabeschnittstelle (204);
einen Speicher (206);
eine Sicherheitsvorrichtung (208) zum Analysieren empfangener Rahmen nach Sicherheitskriterien und zum Sichern von Rahmen, die die Sicherheitskriterien erfüllen, wobei die Sicherheitskriterien einschließlich des Rahmens ein Label-geschalteter Rahmen sind, wobei, wenn ein empfangener Rahmen (600) die Sicherheitskriterien erfüllt:
ein Label-geschalteter Rahmenkopf (604) und eine Label-geschaltete Rahmennutzlast (606) des Label-gesteuerten Rahmens (600) analysiert werden;
die Label-geschaltete Rahmennutzlast (606) durch die Sicherheitsvorrichtung (208) gesichert ist, um eine gesicherte Label-geschaltete Rahmennutzlast (606') zu erzeugen;
der Label-geschaltete Rahmenkopf (604) und die gesicherte Label-geschaltete Rahmennutzlast (606') zusammengebaut sind, um einen gesicherten Label-geschalteten Rahmen zu erzeugen; und
der gesicherte Label-geschaltete Rahmen an die Ein-/Ausgabeschnittstelle (204) zur Weiterleitung an die zweite Netzwerkkomponente weitergeleitet wird.

9. Sicherheitsvorrichtung (128) nach Anspruch 8, wobei die Ein-/Ausgabeschnittstelle (204) mindestens einen Eingangsport (212) zum Empfangen von Rahmen und mindestens einen Ausgangsport (214) zum Weiterleiten von Rahmen beinhaltet.

10. Sicherheitsvorrichtung (128) nach Anspruch 8 oder Anspruch 9, wobei die Ein-/Ausgabeschnittstelle (204) einen dedizierten Steueranschluss (210) beinhaltet.

11. Sicherheitsvorrichtung (128) nach einem der Ansprüche 8 bis 10, wobei die Sicherheitskriterien ferner ein Kriterium in Bezug auf einen Labelwert eines Labels in dem Label-geschalteten Rahmenkopf (604) beinhalten.

12. Sicherheitsvorrichtung (128) nach einem der Ansprüche 8 bis 11, wobei die Sicherheitsvorrichtung (208) die Label-geschaltete Rahmennutzlast (606) unter Verwendung eines Ein-Schlüssel-Kryptographieverfahrens sichert.

13. Sicherheitsvorrichtung (128) nach einem der Ansprüche 8 bis 12, wobei der Label-geschaltete Rahmen (600) ein MPLS-Rahmen ist und der Label-geschaltete Rahmenkopf (604) ein MPLS-Header ist.

14. Sicherheitsvorrichtung (128) nach Anspruch 13, wobei die Sicherheitskriterien ferner beinhalten, dass ein Labelwert eines Top-Labels im MPLS-Header größer als fünfzehn ist.

15. Sicherheitsvorrichtung (128) nach einem der Ansprüche 13 oder 14, wobei der gesicherte MPLS-Rahmen vor der Weiterleitung an die zweite Netzwerkkomponente in einem Ethernet-Rahmen gekapselt ist, der einen Ethernet-Header (602) und eine Ethernet-CRC (608) beinhaltet.

## Revendications

1. Procédé de sécurisation d'une trame à commutation d'étiquette (600) pour une transmission sur un réseau (100), la trame à commutation d'étiquette (600) comprenant un en-tête (604) de trame à commutation d'étiquette et une charge utile (606) de trame à commutation d'étiquette, le procédé comprenant les étapes consistant à :
- recevoir la trame à commutation d'étiquette (600) à partir d'une source ;
- déterminer si la trame à commutation d'étiquette (600) répond aux critères de sécurité ;
- si la trame à commutation d'étiquette (600) répond aux critères de sécurité, sécuriser la charge utile (606) de trame à commutation d'étiquette et créer une trame à commutation d'étiquette sécurisée comprenant l'en-tête (604) de trame à commutation d'étiquette et la charge utile sécurisée (606') de trame à commutation d'étiquette ; et
- transférer la trame à commutation d'étiquette sécurisée.

2. Procédé selon la revendication 1, dans lequel le critère de sécurité comprend un critère relatif à une valeur d'étiquette d'une étiquette de l'en-tête (604) de trame à commutation d'étiquette.

3. Procédé selon la revendication 1 ou la revendication 2, dans lequel la charge utile (606) de trame à commutation d'étiquette est sécurisée par emploi d'un procédé de cryptographie à clé unique.

4. Procédé selon l'une quelconque des revendications 1 à 3, dans lequel la trame à commutation d'étiquette (600) est une trame MPLS et où l'en-tête (604) de trame à commutation d'étiquette est un en-tête de MPLS.

5. Procédé selon la revendication 4, dans lequel les critères de sécurité comprennent qu'une valeur d'étiquette dans une étiquette supérieure dans l'en-tête de MPLS dépasse quinze.

6. Procédé selon l'une quelconque des revendications précédentes, dans lequel d'autres trames, reçues à partir d'une source pour transmission sur un réseau qui répond aux critères de sécurité, sont sécurisées à l'aide d'un procédé de cryptographie à clé unique, les autres trames étant sécurisées par la même clé, quelle que soit la source ou la destination.

7. Procédé selon l'une quelconque des revendications 4 à 6, dans lequel la taille de la trame de MPLS sécurisée est comparée à une taille de MTU du réseau (100) et si la trame de MPLS sécurisée dépasse la taille de MTU du réseau (100), la trame de MPLS sécurisée est abandonnée et une condition d'erreur signalée.

8. Dispositif de sécurité (128) permettant de sécuriser le trafic sur un réseau de commutation d'étiquettes (100), le dispositif de sécurité étant configuré pour recevoir des trames à partir d'un premier dispositif de réseau et pour transférer ces trames à un second dispositif de réseau, le dispositif de sécurité comprenant :
- une interface d'entrée/sortie (204) ;
- une mémoire (206) ;
- un moteur de sécurité (208) permettant d'analyser les trames reçues vis-à-vis des critères de sécurité et des trames de sécurisation qui répondent aux critères de sécurité, les critères de sécurité comprenant la trame qui est une trame à commutation d'étiquette, et si une trame reçue (600) répond aux critères de sécurité :
- un en-tête (604) de trame à commutation d'étiquette et une charge utile (606) de trame à commutation d'étiquette de la trame à commutation d'étiquette (600) sont analysés ;
- la charge utile (606) de trame à commutation d'étiquette est sécurisée par le moteur de sécurité (208) pour créer une charge utile sécurisée (606') de trame à commutation d'étiquette ;
- l'en-tête de trame à commutation d'étiquette (604) et la charge utile sécurisée (606') de trame à commutation d'étiquette sont assemblés pour créer une trame à commutation d'étiquette sécurisée ; et
- la trame à commutation d'étiquette sécurisée est transmise à l'interface d'entrée/sortie (204) pour transfert au second dispositif de réseau.

9. Dispositif de sécurité (128) selon la revendication 8, dans lequel l'interface d'entrée/sortie (204) comprend au moins un port d'entrée (212) permettant de recevoir des trames et au moins un port de sortie (214) permettant de transférer les trames.

10. Dispositif de sécurité (128) selon la revendication 8 ou la revendication 9, dans lequel l'interface d'entrée/sortie (204) comprend un port dédié de commande (210).

11. Dispositif de sécurité (128) selon l'une quelconque des revendications 8 à 10, dans lequel les critères de sécurité comprennent en outre un critère relatif à une valeur d'étiquette d'une étiquette présente dans l'en-tête (604) de trame à commutation d'étiquette.

12. Dispositif de sécurité (128) selon l'une quelconque des revendications 8 à 11, dans lequel le moteur de sécurité (208) sécurise la charge utile (606) de trame à commutation d'étiquette selon un procédé de cryptographie à clé unique.

13. Dispositif de sécurité (128) selon l'une quelconque des revendications 8 à 12, dans lequel la trame à commutation d'étiquette (600) est une trame de MPLS et où l'en-tête (604) de trame à commutation d'étiquette est un en-tête de MPLS.

14. Dispositif de sécurité (128) selon la revendication 13, dans lequel les critères de sécurité comprennent en outre le fait qu'une valeur d'étiquette d'une étiquette supérieure dans l'en-tête de MPLS dépasse quinze.

15. Dispositif de sécurité (128) selon l'une quelconque des revendications 13 ou 14, dans lequel avant d'être transféré au second dispositif de réseau, la trame sécurisée de MPLS est encapsulée à l'intérieur d'une trame Ethernet comprenant un en-tête Ethernet (602) et un CRC Ethernet (608).
